# EUROPÄISCHE PATENTSCHRIFT

(11) **EP 2 143 985 B1**
(45) Veröffentlichungstag und Bekanntmachung des Hinweises auf die Patenterteilung: **01.09.2010**
(21) Anmeldenummer: 09007464.2
(22) Anmeldetag: 05.06.2009
(51) Int. Cl.: F16L 35/00

(54) **Codierelement für eine Anschlusseinrichtung einer Fluidleitung**
Encoding element for a connection device of a fluid connection
Elément de codage pour un dispositif de raccordement d'une conduite de fluide

(30) Priorität: 19.06.2008 DE 102008029225
(43) Veröffentlichungstag der Anmeldung: 13.01.2010
(73) Patentinhaber: Eisele Pneumatics GmbH & Co. KG, 71332 Waiblingen (DE)
(72) Erfinder: Müller, Bernhard, 71397 Leutenbach (DE)
(74) Vertreter: Bartels & Partner

(56) Entgegenhaltungen:
- DE-U1- 20 202 275
- DE-U1- 20 218 680
- DE-U1-202005 005 320

## Beschreibung

Die Erfindung betrifft ein Codierelement für eine Anschlusseinrichtung einer Fluidleitung zum Signalisieren des in der Fluidleitung transportierten Mediums, insbesondere ein Codierelement, das lösbar auf die Anschlusseinrichtung einer Fluidleitung aufsteckbar ist.

Mit Anschlusseinrichtungen für Fluidleitungen können röhrenartige Leitungen, wie beispielsweise Schläuche, mit weiteren Komponenten einer pneumatischen oder hydraulischen Anlage oder mit weiterführenden Leitungen fluiddicht verbunden werden. Die Festlegung der Leitung an der Anschlusseinrichtung erfolgt über Klemmmittel, die beispielsweise mittels einer Betätigungshülse spannbar und/oder lösbar sind.

Die Anschlusseinrichtungen sind innerhalb einer gegebenen Baureihe von identischem Aussehen und variieren nur hinsichtlich ihrer Baugröße. Sofern auch die angeschlossenen Leitungen eine im Wesentlichen identische Erscheinungsform haben, ist bei einer großen Anzahl von Leitungen und zugehörigen Anschlusseinrichtungen die Identifizierung einer bestimmten Leitung oder einer Gruppe von Leitungen erschwert.

DE 202 02 275 U1 beschreibt ein Codierelement nach dem Oberbegriff des Anspruchs 1.

Der Erfindung liegt die Aufgabe zugrunde, eine Codierung einer Anschlusseinrichtung und damit eine Codierung der an die Anschlusseinrichtung anschließbaren Fluidleitung zu ermöglichen.
Die Codierung soll einfach anbringbar und erforderlicheäfalls auch wieder lösbar sein. In einer Ausführungsart soll der für die Anschlusseinrichtung erforderliche Bauraum durch die Codierung nicht wesentlich erhöht sein.

Die Aufgabe ist durch das im Anspruch 1 bestimmte Codierelement gelöst. Ausführungsarten der Erfindung sind in den Unteransprüchen bestimmt.

In einer Ausführungsart ist die Aufgabe gelöst durch ein Codierelement für eine Anschlusseinrichtung einer Fluidleitung zum Signalisieren des in der Fluidleitung transportierten Mediums, wobei das Codierelement einstückig einen scheibenförmigen Abschnitt und mindestens zwei separate und sich im Wesentlichen rechtwinklig zum scheibenförmigen Abschnitt erstreckende kragenförmige Abschnitte zum Aufschieben des Codierelements auf die Anschlusseinrichtung aufweist, und wobei das Codierelement beim Aufschieben auf die Anschlusseinrichtung federelastisch verformbar ist und eine Klemmkraft für das Festlegen des Codierelements an der Anschlusseinrichtung durch eine klemmende Anlage der kragenförmigen Abschnitte an der Anschlusseinrichtung aufbringt.

Das Codierelement wird mit Hilfe seiner kragenförmigen Abschnitte beispielsweise auf eine Betätigungshülse der Anschlusseinrichtung aufgeschoben oder aufgesteckt. Das Klemmen des Codierelements an der Anschlusseinrichtung erfolgt nicht über eine Passung einer Bohrung oder eines sonstigen hohlzylindrischen Abschnittes des Codierelements, sondern durch die federelastische Verformung des Codierelements. Dabei können sich sowohl die kragenförmigen Abschnitte als auch der scheibenförmige Abschnitt federelastisch verformen.

In einer Ausführungsart wird die Klemmkraft überwiegend oder sogar im Wesentlichen ausschließlich durch eine federelastische Verformung des scheibenförmigen Abschnitts bereitgestellt. Dabei verformen sich insbesondere die zwischen den kragenförmigen Abschnitten angeordneten Bereiche des scheibenförmigen Abschnitts. Die Biegesteifigkeit der kragenförmigen Abschnitte kann demgegenüber vergleichsweise hoch sein. Die kragenförmigen Abschnitte weisen in Umfangsrichtung um eine Längsachse des Codierelements eine vorzugsweise kreisbogenförmige Krümmung auf.

Durch ein Verformen des scheibenförmigen Abschnitts kommt es zu einer klammerförmigen Aufweitung einer von den kragenförmigen Abschnitten begrenzten Aufnahmeöffnung des Codierelements, wobei im unverformten Zustand die lichte Weite des Codierelements zwischen den kragenförmigen Abschnitten geringer ist als der Außendurchmesser des Abschnitts der Anschlusseinrichtung, auf den das Codierelement aufschiebbar ist. Das Codierelement kann soweit auf die Anschlusseinrichtung aufgeschoben werden, dass der scheibenförmige Abschnitt in Anlage an ein stirnseitiges Ende der Anschlusseinrichtung kommt.

In einer Ausführungsart sind die beiden kragenförmigen Abschnitte in Umfangsrichtung um den scheibenförmigen Abschnitt voneinander beabstandet. Im Gegensatz zu einem von den kragenförmigen Abschnitten gebildeten geschlossenen Ring muss durch die Unterbrechung der kragenförmigen Abschnitte keine Presspassung oder sonstige vergleichbare Festlegung des Codierelements an der Anschlusseinrichtung vorgesehen werden. Vielmehr erlaubt die Unterbrechung der kragenförmigen Abschnitte in Umfangsrichtung eine federelastische Verformung insbesondere des scheibenförmigen Abschnitts des Codierelements, so dass mit vergleichsweise geringen Kräften dennoch eine sichere Festlegung des Codierelements an der Anschlusseinrichtung möglich ist, und dadurch auch ein Lösen des Codierelements von der Anschlusseinrichtung mit vergleichsweise geringen Kräften möglich ist.

In einer Ausführungsart liegen die beiden kragenförmigen Abschnitte in Bezug auf eine Längsachse des Codierelements einander gegenüber. Vorzugsweise ist das Codierelement achsensymmetrisch zu seiner Längsachse ausgebildet. In einer Ausführungsart weist das Codierelement genau zwei kragenförmige Abschnitte auf, deren Erstreckung in Umfangsrichtung übereinstimmend ist. Alternativ hierzu kann das Codierelement auch mehr als zwei voneinander beabstandete kragenförmige Abschnitte aufweisen.

In einer Ausführungsart erstreckt sich mindestens einer der kragenförmigen Abschnitte, vorzugsweise beide kragenförmige Abschnitte, über einen Kreisbogenabschnitt zwischen 30 und 150°, insbesondere zwischen 60 und 120° und vorzugsweise zwischen 90 und 110°. Je größer der Kreisbogenabschnitt der kragenförmigen Abschnitte ist, desto biegesteifer ist das Codierelement und desto größer sind die von dem Codierelement aufbringbaren Klemmkräfte.

In einer Ausführungsart weist mindestens einer der kragenförmigen Abschnitte auf seiner nach innen gerichteten Mantelfläche Anlagemittel für eine klemmende Anlage an der Anschlusseinrichtung auf. Die Anlagemittel können an oder nahe einem dem scheibenförmigen Abschnitt gegenüberliegenden axialen Ende der kragenförmigen Abschnitte angeordnet sein. Die Anlagemittel können insbesondere eine punktförmige oder linienförmige Anlage der kragenförmigen Abschnitte an der Anschlusseinrichtung bereitstellen.

In einer Ausführungsart sind die Anlagemittel einstückig von dem Codierelement ausgebildet. Die Anlagemittel können durch einen bogenförmig verlaufenden Anlagesteg gebildet sein. Soweit an der Anschlusseinrichtung eine zugehörige Vertiefung vorgesehen ist, beispielsweise eine umlaufende Nut, können die Anlagemittel in diese einschnappen und dadurch ist das Codierelement verrastend an der Anschlusseinrichtung festlegbar.

In einer Ausführungsart weisen die kragenförmigen Abschnitte auf ihrer nach innen gerichteten Mantelfläche an oder nahe einem dem scheibenförmigen Abschnitt gegenüberliegenden axialen Ende eine Einführschräge auf. Die Einführschräge kann kegelförmig oder gekrümmt verlaufen, beispielsweise auch durch einen Radius gebildet sein. Die Einführschräge kann sich in Umfangsrichtung über den gesamten kragenförmigen Abschnitt erstrecken.

In einer Ausführungsart weist der scheibenförmige Abschnitt im Bereich zwischen zwei benachbarten kragenförmigen Abschnitten auf seiner Außenkante eine von der Kreisform abweichende Kontur auf, insbesondere kann dieser Abschnitt sekantenförmig abgeflacht sein. Die von der Kreisform abweichende Kontur kann sich von einem kragenförmigen Abschnitt bis zum benachbarten kragenförmigen Abschnitt erstrecken. Im Bereich der von der Kreisform abweichenden Kontur ist der Außendurchmesser des Codierelements geringer als in einem Bereich der kragenförmigen Abschnitte. Dadurch ist der Außendurchmesser einer Anschlusseinrichtung mit aufgesetztem Codierelement im Bereich der von der Kreisform abweichenden Kontur des scheibenförmigen Abschnitts reduziert und gegebenenfalls allein durch die Anschlusseinrichtung bestimmt Dadurch ist es möglich, auch eng benachbart angeordnete Anschlusseinrichtungen mit einem Codierelement zu versehen, ohne dass sich die Codierelemente benachbarter Anschlusseinrichtungen berühren oder gegenseitig verklemmen.

In einer Ausführungsart ist das Codierelement aus Aluminium hergestellt und durch eine elektrolytische Oxidation farbig codiert. Alternativ hierzu kann das Codierelement auch aus Kunststoff hergestellt sein und/oder durch eine Lackierung farbig codiert sein. Durch unterschiedliche Farben kann beispielsweise das in der zugehörigen Leitung transportierte Medium signalisiert werden. Alternativ oder ergänzend zu einer farbigen Codierung kann das Codierelement auch eine sonstige visuell erfassbare Codierung oder auch eine haptisch erfassbare Codierung aufweisen, beispielsweise durch vorzugsweise einstückig ausgebildete tastbare Formelemente.

In einer Ausführungsart ist der scheibenförmige Abschnitt ringscheibenförmig. Die Breite des Ringes in radialer Richtung beträgt in einem Ringabschnitt mit einem anschließenden kragenförmigen Abschnitt zwischen 40 und 200 % der axialen Erstreckung des kragenförmigen Abschnitts, insbesondere zwischen 50 und 150 % und vorzugsweise zwischen 60 und 100 %. Dadurch wird eine relativ hohe Biegesteifigkeit des scheibenförmigen Abschnitts in diesem Bereich gewährleistet und eine federelastische Verformung des scheibenförmigen Abschnitts erfolgt insbesondere im Bereich zwischen den kragenförmigen Abschnitten. Dadurch kommt es zu einem klammerartigen Klemmen des Codierelements an der Anschlusseinrichtung.

Weitere Vorteile, Merkmale und Einzelheiten der Erfindung ergeben sich aus den Unteransprüchen sowie der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Vorderansicht einer Anschlusseinrichtung mit einem erfindungsgemäßen Codierelement,
- Fig. 2: zeigt eine Seitenansicht der Anschlusseinrichtung der Fig. 1,
- Fig. 3: zeigt eine Draufsicht der Anschlusseinrichtung der Fig. 1,
- Fig. 4: zeigt eine Unteransicht des Codierelements der Fig. 5,
- Fig. 5: zeigt eine Seitenansicht eines erfindungsgemäßen Codierelements,
- Fig. 6: zeigt eine Draufsicht auf das Codierelement der Fig. 5,
- Fig. 7: zeigt eine Seitenansicht einer Y-förmigen Anschlusseinrichtung, die mit erfindungsgemäßen Codierelementen ausgerüstet ist,
- Fig. 8: zeigt eine Draufsicht auf die Anschlusseinrichtung der Fig. 7, und
- Fig. 9: zeigt ein weiteres Ausführungsbeispiel eines Codierelements mit einer Anschlusseinrichtung.

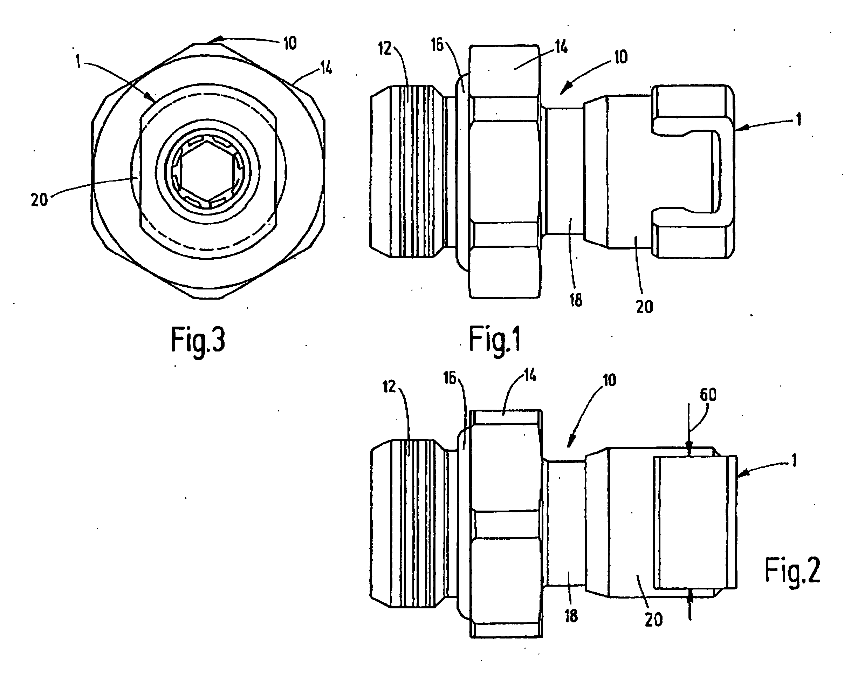

Die Fig. 1 zeigt eine Vorderansicht eines erfindungsgemäßen Codierelements 1 mit einer Anschlusseinrichtung 10 einer nicht dargestellten Fluidleitung. Die Fig. 2 zeigt eine Seitenansicht und die Fig. 3 eine Draufsicht der Anschlusseinrichtung der Fig. 1.
Die Anschlusseinrichtung 10 weist an ihrem dem Codierelement 1 gegenüberliegenden axialen Ende ein Außengewinde 12 sowie eine Werkzeugangriffsfläche 14 und dazwischen ein in eine Nut eingelegtes Dichtmittel 16 auf, mittels dem die Anschlusseinrichtung 10 in dichte Verbindung beispielsweise mit einer Schottwand bringbar ist. Die an die Anschlusseinrichtung 10 anschließbare röhrenartige Leitung wird von der Seite des Codierelements 1 in eine Aufnahmeöffnung der Anschlusseinrichtung 10 eingesteckt und durch Verschieben einer gegenüber einem Grundkörper 18 der Anschlusseinrichtung 10 verschiebbar geführten Betätigungshülse 20 an der Anschlusseinrichtung 10 klemmend und dicht festgelegt. Auf die Betätigungshülse 20 ist axial endseitig das Codierelement 1 aufschiebbar.

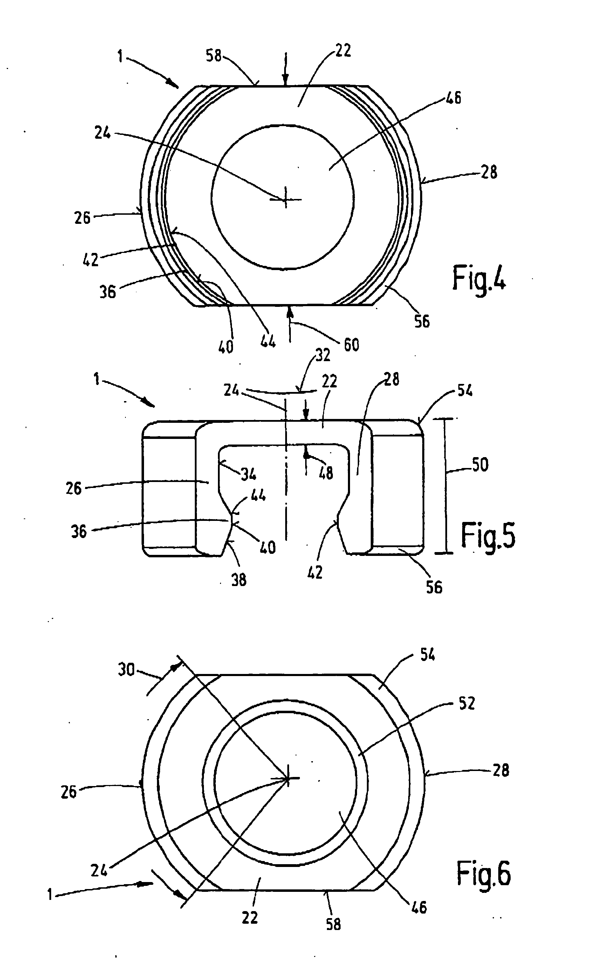

Die Fig. 5 zeigt eine Seitenansicht eines erfindungsgemäßen Codierelements 1. Die Fig. 4 zeigt eine Unteransicht des Codierelements 1 der Fig. 5. Die Fig. 6 zeigt eine Draufsicht auf das Codierelement 1 der Fig. 5. Das Codierelement 1 weist einstückig einen scheibenförmigen Abschnitt 22 und zwei voneinander getrennt ausgebildete und sich im Wesentlichen rechtwinklig zum scheibenförmigen Abschnitt 22 und parallel zu einer Längsachse 24 des Codierelements 1 erstreckende kragenförmige Abschnitte 26, 28 zum Aufschieben des Codierelements 1 auf die Anschlusseinrichtung 10 auf. Beim Aufschieben auf die Anschlusseinrichtung 10 verformt sich das Codierelement 1 und bringt dadurch eine Klemmkraft für das Festlegen des Codierelement 1 an der Anschlusseinrichtung 10 durch eine klemmende Anlage der kragenförmigen Abschnitte 26, 28 an der Anschlusseinrichtung 10 auf.
In dem dargestellten Ausführungsbeispiel ist die Klemmkraft überwiegend durch eine federelastische Verformung des scheibenförmigen Abschnitts 22 entsprechend der in der Fig. 5 gezeigten Biegelinie 32 bereitstellbar. Durch diese Verformung wird die lichte Weite zwischen den kragenförmigen Abschnitten 26, 28 vergrößert, so dass das Codierelement 1 auf die Anschlusseinrichtung 10 aufschiebbar ist. Die kragenförmigen Abschnitte 26, 28 erstrecken sich dabei jeweils über einen Kreisbogenabschnitt 30 (Fig. 6) von im Ausführungsbeispiel etwa 100°.

Die kragenförmigen Abschnitte 26, 28 weisen auf ihrer nach innen gerichteten Mantelfläche 34 Anlagemittel 36 für eine klemmende Anlage an der Anschlusseinrichtung 10 auf. Die Anlagemittel 36 sind einstückig von dem Codierelement 1 ausgebildet und durch einen bogenförmig sich über den gesamten kragenförmigen Abschnitt 26, 28 erstreckenden Anlagesteg gebildet. Ausgehend von einem der Anschlusseinrichtung 10 zugewendeten axialen Ende weist der kragenförmige Abschnitt 26, 28 zunächst eine Einführschräge 38 in Form einer Kegelfläche auf, die bis zu einer ersten kreisbogenförmig verlaufenden Kante 40 reicht. Daran schließt sich eine weitere kegelförmige Fläche 42 an, die in Bezug auf die Längsachse 24 einen gegenüber der Einführschräge 38 geringeren Kegelwinkel und eine geringere axiale Erstreckung aufweist und bis zur zweiten Kante 44 reicht. Die lichte Weite zwischen den beiden kragenförmigen Abschnitten 26, 28 ist an der zweiten Kante 44 geringer als an der ersten Kante 40.

im Bereich des scheibenförmigen Abschnitts 22 weist das Codierelement 1 eine Öffnung 46 für den Durchtritt der anzuschließenden Leitung auf. Die Öffnung 46 hat beispielsweise einen Durchmesser von 8 mm.
Die Dicke 48 des scheibenförmigen Abschnitts 22 beträgt zwischen 10 und 30 % der axialen Länge 50 des Codierelements 1, die beispielsweise 5 mm beträgt, insbesondere zwischen 12 und 20 % und beispielsweise 0,8 mm. Im Ausführungsbeispiel beträgt der Außendurchmesser des Codierelements 1 im Bereich der kragenförmigen Abschnitte 26, 28 etwa 15 mm.

Der scheibenförmige Abschnitt 22 weist im Bereich der Öffnung 46 eine Einführschräge 52 auf, insbesondere eine Kegelfläche oder eine Verrundung, die ein Einführen der anzuschließenden Leitung in das Codierelement 1 und damit in die Anschlusseinrichtung 10 vereinfacht. Radial außenseitig weist der scheibenförmige Abschnitt 22 eine Verrundung 54 auf. Der kragenförmige Abschnitt 26, 28 weist an seinem dem scheibenförmigen Abschnitt 22 gegenüberliegenden axialen Ende radial außenseitig eine weitere Verrundung 56 auf.

Der scheibenförmige Abschnitt 22 weist im Bereich zwischen zwei benachbarten kragenförmigen Abschnitten 26, 28 auf seiner Außenkante eine von der Kreisform abweichende Kontur 58 auf, insbesondere eine sekantenförmige Abflachung. Diese ist beispielsweise durch das Abschneiden, Abschleifen oder dergleichen eines zuvor rotationssymmetrischen Teils fertigungstechnisch verhältnismäßig einfach herstellbar. Der Außendurchmesser des Codierelements 1 beträgt im Bereich der von der Kreisform abweichenden Kontur 58 zwischen 75 und 90 % des Außendurchmessers des Codierelements 1 im Bereich der kragenförmigen Abschnitt 26, 28, insbesondere zwischen 80 und 85 %. Die Länge der sekantenförmigen Abflachung beträgt im Ausführungsbeispiel etwa 8 mm.

Durch die Abweichung von einer ringförmig geschlossenen Auskragung ist die Biegesteifigkeit des Codierelements 1 herabgesetzt. Im Bereich der von der Kreisform abweichenden Kontur 58 ist die Erstreckung 60 des Codierelements 1 in radialer Richtung bezogen auf die Längsachse 24 so weit reduziert, dass das Codierelement 1 in radialer Richtung nicht über die Anschlusseinrichtung 10 hinaus steht, insbesondere nicht über die Betätigungshülse 20 der Anschlusseinrichtung 10, wie dies beispielsweise aus der Fig. 2 ersichtlich ist.

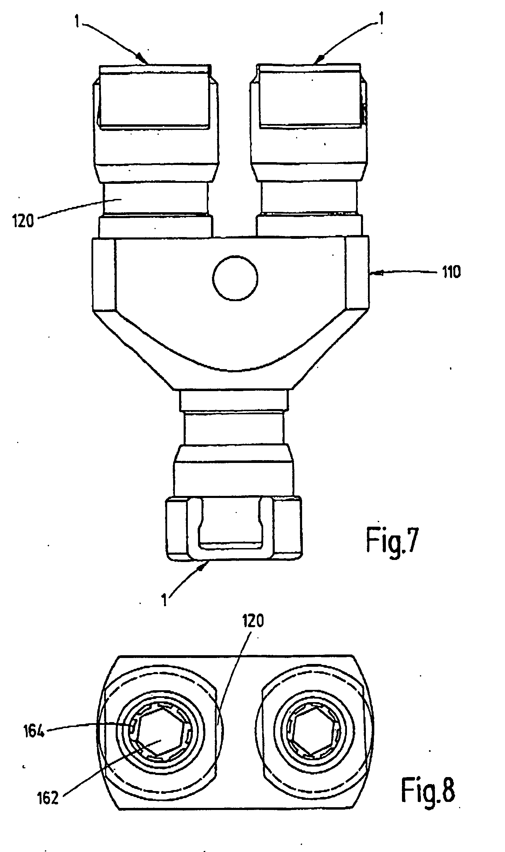

Die Fig. 7 zeigt eine Seitenansicht einer Y-förmigen Anschlusseinrichtung 110, die mit erfindungsgemäßen Codierelementen 1 ausgerüstet ist.
Die Fig. 8 zeigt eine Draufsicht auf die Anordnung der Fig. 7. Aus der Draufsicht ist ersichtlich, dass in die Aufnahmeöffnung 162 der Anschlusseinrichtung 110 Klemmelemente 164 hineinragen, mittels denen eine einsteckbare Leitung in der Anschlusseinrichtung 110 klemmbar ist. Die Klemmwirkung kann dabei durch ein axiales Verschieben der Betätigungshülse 120 aufgehoben oder aktiviert werden.

Bei derartigen Y-förmigen Anschlusseinrichtungen 110 oder bei einer vergleichsweise eng benachbarten Anordnung von Anschlusseinrichtungen 10 ist es vorteilhaft, dass die Codierelemente 1 eine seitliche Abflachung aufweisen, insbesondere im an derAnschlusseinrichtung 10, 110 montierten Zustand seitlich nicht über die Betätigungshülse 20, 120 hinausragen. Dadurch ist ein einfaches Anbringen und Lösen der Codierelemente 1 gewährleistet. Außerdem ist bei einem axialen Verschieben der Betätigungshülse 20,120 zuverlässig verhindert, dass durch eine klemmende Anlage benachbarter Codierelemente 1 gleichzeitig auch eine benachbarte Betätigungshülse betätigt wird.

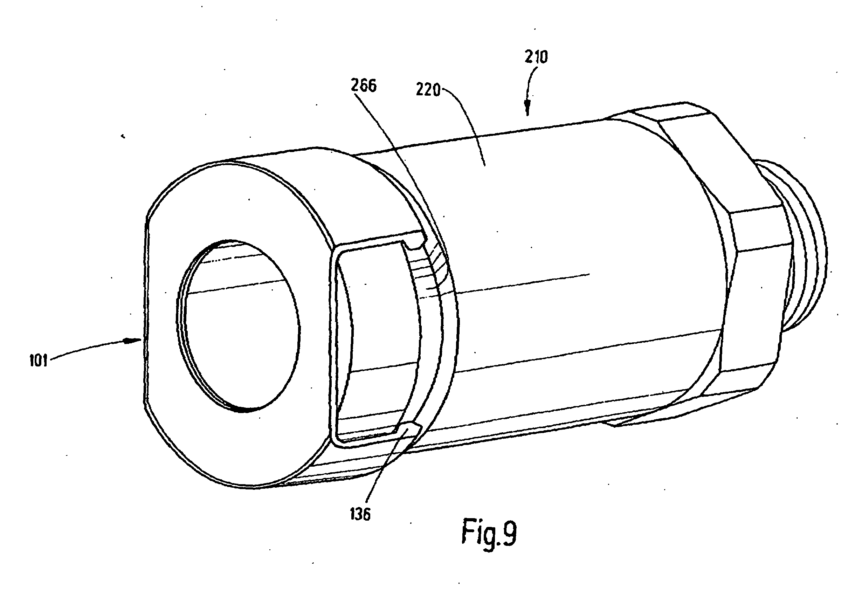

Die Fig. 9 zeigt ein weiteres Ausführungsbeispiel eines Codierelements 101 mit einer Anschlusseinrichtung 210. Die Betätigungshülse 220 weist nahe einem dem Codierelement 101 zugewandten axialen Ende außenseitig eine umlaufende Nut 266 auf, in welche das von dem Codierelement 101 ausgebildete Anlagemittel 136 einrasten kann. Das Anlagemittel 136 kann ähnlich oder identisch ausgebildet sein wie bei dem zuvor beschriebenen Ausführungsbeispiel des Codierelements 1. Das Anlagemittel 136 kann hinsichtlich seiner Außenkontur an die Kontur der Nut 266 angepasst sein, insbesondere dieser im Wesentlichen entsprechen.

## Patentansprüche

1. Codierelement (1) für eine Anschlusseinrichtung (10) einer Fluidleitung zum Signalisieren des in der Fluidleitung transportierten Mediums, **dadurch gekennzeichnet, dass** das Codierelement (1) einstückig einen scheibenförmigen Abschnitt (22) und mindestens zwei separate und sich im Wesentlichen rechtwinklig zum scheibenförmigen Abschnitt (22) erstreckende kragenförmige Abschnitte (26, 28) zum Aufschieben des Codierelements (1) auf die Anschlusseinrichtung (10) aufweist, und dass das Codierelement (1) beim Aufschieben auf die Anschlusseinrichtung (10) federelastisch verformbar ist und eine Klemmkraft für das Festlegen des Codierelements (1) an der Anschlusseinrichtung (10) durch eine klemmende Anlage der kragenförmigen Abschnitte (26, 28) an der Anschlusseinrichtung (10) aufbringt.

2. Codierelement (1) nach Anspruch 1, **dadurch gekennzeichnet, dass** die Klemmkraft überwiegend durch eine federelastische Verformung des scheibenförmigen Abschnitts (22) bereitstellbar ist.

3. Codierelement (1) nach Anspruch 1 oder 2, **dadurch gekennzeichnet, dass** die beiden kragenförmigen Abschnitte (26, 28) in Umfangsrichtung um den scheibenförmigen Abschnitt (22) voneinander beabstandet sind.

4. Codierelement (1) nach Anspruch 1 oder einem der vorgenannten Ansprüche, **dadurch gekennzeichnet, dass** die beiden kragenförmigen Abschnitte (26, 28) in Bezug auf eine Längsachse (24) des Codierelements (1) einander gegenüber liegen.

5. Codierelement (1) nach Anspruch 1 oder einem der vorgenannten Ansprüche, **dadurch gekennzeichnet, dass** mindestens einer der kragenförmigen Abschnitte (26, 28), vorzugsweise beide kragenförmigen Abschnitte (26, 28), sich über einen Kreisbogenabschnitt (30) zwischen 30 und 150° erstreckt, insbesondere über einen Kreisbogenabschnitt (30) zwischen 60 und 120° und vorzugsweise über einen Kreisbogenabschnitt (30) zwischen 90 und 110°.

6. Codierelement (1) nach Anspruch 1 oder einem der vorgenannten Ansprüche, **dadurch gekennzeichnet, dass** mindestens einer der kragenförmigen Abschnitte (26, 28) auf seiner nach innen gerichteten Mantelfläche (34) Anlagemittel (36) für eine klemmende Anlage an der Anschlusseinrichtung (10) aufweisen.

7. Codierelement (1) nach Anspruch 6, **dadurch gekennzeichnet, dass** die Anlagemittel (36) einstückig von dem Codierelement (1) ausgebildet sind.

8. Codierelement (1) nach Anspruch 6 oder 7, **dadurch gekennzeichnet, dass** die Anlagemittel (36) durch einen bogenförmig verlaufenden Anlagesteg gebildet sind.

9. Codierelement (1) nach Anspruch 1 oder einem der vorgenannten Ansprüche, **dadurch gekennzeichnet, dass** die kragenförmigen Abschnitte (26, 28) auf ihrer nach innen gerichteten Mantelfläche (34) axial endseitig eine Einführschräge (38) aufweisen.

10. Codierelement (1) nach Anspruch 1 oder einem der vorgenannten Ansprüche, **dadurch gekennzeichnet, dass** der scheibenförmige Abschnitt (22) im Bereich zwischen zwei benachbarten kragenförmigen Abschnitten (26, 28) auf seiner Außenkante eine von der Kreisform abweichende Kontur (58) aufweist, insbesondere sekantenförmig abgeflacht ist.

11. Codierelement (1) nach Anspruch 1 oder einem der vorgenannten Ansprüche, **dadurch gekennzeichnet, dass** das Codierelement (1) aus Aluminium hergestellt ist und durch elektrolytische Oxidation farbig codiert ist.

12. Codierelement (1) nach Anspruch 1 oder einem der vorgenannten Ansprüche, **dadurch gekennzeichnet, dass** der scheibenförmige Abschnitt (22) ringscheibenförmig ist und die Breite des Ringes in radialer Richtung in einem Ringabschnitt mit einem anschließenden kragenförmigen Abschnitt (26, 28) zwischen 40 und 200 % der axialen Erstreckung des kragenförmigen Abschnitts (26, 28) beträgt, insbesondere zwischen 50 und 150 % und vorzugsweise zwischen 60 und 100 %.

13. Codierel ement (1) nach Anspruch 1 oder einem der vorgenannten Ansprüche, **dadurch gekennzeichnet, dass** das Codierelement (1) eine Öffnung (46) für den Durchtritt der anzuschließenden Fluidleitung aufweist.

14. Anschlusseinrichtung (10) für eine Fluidleitung, mit einem Codierelement (1) zum Signalisieren des in der Fluidleitung transportierten Mediums nach Anspruch 1 oder einem der vorgenannten Ansprüche.

## Claims

1. An encoding element (1) for a connection device (10) of a fluid line for signalling the medium being conveyed within the fluid line, **characterised in that** the encoding element (1) has as a disc-shaped section (22), formed as a single piece, and at least two separate flange-like sections (26, 28) extending substantially at right angles to the disc-shaped section (22) for pushing the encoding element (1) onto the connection device (10), and that when pushing onto the connection device (10) the encoding element (1) is spring-elastically deformable and applies a clamping force for fixing the encoding element (1) onto the connection device (10) by clamping attachment of the flange-like sections (26, 28) to the connection device (10).

2. The encoding element according to Claim 1, **characterised in that** the clamping force can predominantly be provided by spring-elastic deformation of the disc-shaped section (22).

3. The encoding element (1) according to Claim 1 or 2, **characterised in that** the two flange-like sections (26, 28) are spaced apart from one another around the disc-shaped section (22) in the circumferential direction.

4. The encoding element (1) according to Claim 1 or any of the preceding claims, **characterised in that** the two flange-like sections (26, 28) lie opposite one another in relation to a longitudinal axis (24) of the encoding element (1).

5. The encoding element (1) according to Claim 1 or any of the preceding claims, **characterised in that** at least one of the flange-like sections (26, 28), preferably both flange-like sections (26, 28), extends over a circular arc section (30) of between 30 and 150°, in particular over a circular arc section (30) of between 60 and 120°, and preferably over a circular arc section (30) of between 90 and 110°.

6. The encoding element (1) according to Claim 1 or any of the preceding claims, **characterised in that** at least one of the flange-like sections (26, 28) has attachment means (36) on its inwardly directed lateral surface (34) for clamping attachment to the connection device (10).

7. The encoding element (1) according to Claim 6, **characterised in that** the attachment means (36) are formed as a single piece by the encoding element (1).

8. The encoding element (1) according to Claim 6 or 7, **characterised in that** the attachment means (36) are formed by an arcuately extending attachment bar.

9. The encoding element (1) according to Claim 1 or any of the preceding claims, **characterised in that** the flange-like sections (26, 28) have an insertion slant (38) on their inwardly directed lateral surface (34) on their end axially.

10. The encoding element (1) according to Claim 1 or any of the preceding claims, **characterised in that** the disc-shaped section (22) has a contour (58) deviating from the circular shape in the region between two adjacent flange-like sections (26, 28) on its outer edge, in particular flattened like a secant.

11. The encoding element (1) according to Claim 1 or any of the preceding claims, **characterised in that** the encoding element (1) is made of aluminium and is colour-encoded by electrolytic oxidation.

12. The encoding element (1) according to Claim 1 or any of the preceding claims, **characterised in that** the disc-shaped section (22) is in the form of an annular disc and the width of the ring in the radial direction in a ring section with an adjacent flange-like section (26, 28) is between 40 and 200 % of the axial extension of the flange-like section (26, 28), in particular between 50 and 150 % and preferably between 60 and 100 %.

13. The encoding element (1) according to Claim 1 or any of the preceding claims, **characterised in that** the encoding element (1) has an opening (46) through which the fluid line to be connected can pass.

14. A connection device (10) for a fluid line, having an encoding element (1) for signalling the medium being conveyed within the fluid line according to Claim 1 or any of the preceding claims.

## Revendications

1. Elément (1) de codage pour un dispositif (10) de raccordement d'un conduit de fluide, afin de signaler le milieu transporté dans le conduit de fluide, **caractérisé en ce que** l'élément (1) de codage comporte d'une seule pièce un segment (22) en forme de disque et au moins deux segments (26, 28) en forme de collet s'étendant sensiblement perpendiculairement au segment (22) en forme de disque pour emmancher l'élément (1) de codage sur le dispositif (10) de raccordement et **en ce que** l'élément (1) de codage est déformable en ayant l'élasticité d'un ressort lorsqu'il est emmanché sur le dispositif (10) de raccordement et applique une force de serrage pour la fixation de l'élément (1) de codage au dispositif (10) de raccordement par une application de serrage des segments (26, 28) en forme de collet sur le dispositif (10) de raccordement.

2. Elément (1) de codage suivant la revendication 1, **caractérisé en ce que** la force de serrage est mise à disposition principalement par une déformation à élasticité d'un ressort du segment (22) en forme de disque.

3. Elément (1) de codage suivant la revendication 1 ou 2, **caractérisé en ce que** les deux segments (26, 28) en forme de collet sont à distance l'un de l'autre dans la direction périphérique autour du segment (22) en forme de disque.

4. Elément (1) de codage suivant la revendication 1 ou l'une des revendications précédentes, **caractérisé en ce que** les deux segments (26, 28) en forme de collet sont opposés l'un à l'autre par rapport à un axe (24) longitudinal de l'élément (1) de codage.

5. Elément (1) de codage suivant la revendication 1 ou l'une des revendications précédentes, **caractérisé en ce que** au moins l'un des segments (26, 28) en forme de collet de préférence les deux segments (26, 28) en forme de collet s'étendent sur un segment (30) d'arc de cercle compris entre 30 et 150°, notamment sur un segment (30) d'arc de cercle compris entre 60 et 120° et, de préférence, sur un segment (30) d'arc de cercle compris entre 90 et 110°.

6. Elément (1) de codage suivant la revendication 1 ou l'une des revendications précédentes, **caractérisé en ce que** au moins l'un des segments (26, 28) en forme de collet comporte sur sa surface (34) latérale tournée vers l'intérieur des moyens (36) d'application pour une application à serrage au dispositif (10) de raccordement.

7. Elément (1) de codage suivant la revendication 6, **caractérisé en ce que** les moyens (36) d'application sont constitués d'une seule pièce par l'élément (1) de codage.

8. Elément (1) de codage suivant la revendication 6 ou 7, **caractérisé en ce que** les moyens (36) d'application sont formés par une barrette d'application s'étendant en forme d'arc.

9. Elément (1) de codage suivant la revendication 1 ou l'une des revendications précédentes, **caractérisé en ce que** les segments (26, 28) en forme de collet comportent à la surface (34) latérale dirigée vers l'intérieur, axialement du côté de l'extrémité, un biseau (38) d'introduction.

10. Elément (1) de codage suivant la revendication 1 ou l'une des revendications précédentes, **caractérisé en ce que** le segment (22) en forme de disque comporte, dans la partie comprise entre deux segments (26, 28) voisins en forme de collet, sur son bord extérieur un contour (58) s'écartant de la forme circulaire, en étant notamment aplati en forme de sécante.

11. Elément (1) de codage suivant la revendication 1 ou l'une des revendications précédentes, **caractérisé en ce que** l'élément (1) de codage est en aluminium et est codé en couleur par oxydation électrolytique.

12. Elément (1) de codage suivant la revendication 1 ou l'une des revendications précédentes, **caractérisé en ce que** le segment (22) en forme de disque est en forme de segment annulaire et la largeur de l'anneau dans la direction radiale, dans un segment circulaire ayant un segment (26, 28) en forme de collet qui se raccorde, est comprise entre 40 et 200% d'étendue axiale du segment (26, 28) en forme de collet, notamment entre 50 et 150% et, de préférence, entre 60 et 100%.

13. Elément (1) de codage suivant la revendication 1 ou l'une des revendications précédentes, **caractérisé en ce que** l'élément (1) de codage a une ouverture (45) pour le passage du conduit de fluide s'y raccordant.

14. Dispositif (10) de raccordement pour un conduit de fluide comprenant un élément (1) de codage pour signaler le milieu transporté dans le conduit de fluide suivant la revendication 1 ou l'une des revendications précédentes.
